# EUROPÄISCHE PATENTSCHRIFT

(11) **EP 1 547 862 B1**
(45) Veröffentlichungstag und Bekanntmachung des Hinweises auf die Patenterteilung: **27.08.2008**
(21) Anmeldenummer: 04029136.1
(22) Anmeldetag: 09.12.2004
(51) Int. Cl.: B60Q 1/04, F21V 17/00

(54) **Leuchteinheit für Fahrzeuge**
Vehicle headlight
Projecteur de voiture

(30) Priorität: 23.12.2003 DE 10360753; 31.07.2004 DE 102004037244
(43) Veröffentlichungstag der Anmeldung: 29.06.2005
(73) Patentinhaber: Hella KGaA Hueck & Co., 59552 Lippstadt (DE)
(72) Erfinder: Mazziotti, Pietro Antonio, 59556 Lippstadt (DE); Riepert, Eckhard, 59558 Lippstadt (DE)

(56) Entgegenhaltungen:
- DE-A1- 4 029 123
- DE-A1- 19 922 142

## Beschreibung

Die Erfindung betrifft eine Leuchteinheit für Fahrzeuge nach dem Oberbegriff des Patentanspruchs 1.

Aus der DE 298 21 068 U1 ist eine Leuchteinheit für Fahrzeuge bekannt, die ein tubusförmiges Gehäuse sowie eine die lichtaustrittsseitige Öffnung desselben abschließende Abdeckscheibe aufweist. Innerhalb des Gehäuses ist ein Reflektor, ein als Linse ausgebildetes Abschlusselement sowie ein das Abschlusselement tragender Halter angeordnet. Nachteilig an der bekannten Leuchteinheit ist die relativ große Quererstreckung desselben. Dies ergibt sich durch das Vorhandensein einer Abdeckscheibe, deren Durchmesser wesentlich größer ist als der Durchmesser des Abschlusselementes.

Aus der nachveröffentlichten DE 102 54 048.9 ist eine Leuchteinheit für Fahrzeuge bekannt, die neben einem Reflektor und einer Lichtquelle lediglich einen ein Abschlusselement tragenden Halter aufweist, der direkt mit einem vorderen Rand eines Reflektors verbunden ist. Zum einen ist das Abschlusselement über ein Klebeverbindung mit dem Halter verbunden. Zum anderen ist der Halter durch eine Klebeverbindung mit dem vorderen Rand des Reflektors verbunden. Vorteilhaft ergibt sich hierdurch eine geringe Quererstreckung der Leuchteinheit. Die bekannte Leuchteinheit weist jedoch den Nachteil auf, dass eine Demontage der Bauteile zum Recyceln derselben relativ aufwändig ist.

Aus der DE 40 29 123 A1 ist eine Leuchteinheit für Fahrzeuge bekannt, die einen schalenförmigen Reflektor, ein als Linse ausgebildetes lichtdurchlässiges Abschlusselement sowie einen den Reflektor mit dem Abschlusselement verbindenden Halter aufweist. An einem vorderen Rand des Reflektors weist dieser einen Flansch auf, über den der Reflektor fest mit dem Halter über einen Bolzen oder mittels einer Punktschweißung verbunden ist. Nachteilig an der bekannten Leuchteinheit ist, dass eine Demontage der Bauteile zum Recyceln derselben relativ aufwändig ist.

Aufgabe der vorliegenden Erfindung ist es daher, eine Leuchteinheit für Fahrzeuge derart weiterzubilden, dass bei geringem Platzbedarf ein zuverlässiger Betrieb und eine verbesserte Recyclefähigkeit gegeben ist.

Zur Lösung dieser Aufgabe weist die Erfindung die Merkmale des Patenanspruchs 1 auf.

Der besondere Vorteil der Erfindung besteht darin, dass wesentlichen Bauteile der Leuchteinheit demontierbar miteinander verbunden sind, so dass eine getrennte Entsorgung bzw. Wiederverwertbarkeit der gegebenenfalls aus einem unterschiedlichen Werkstoff gefertigten Bauteile gewährleistet ist. Vorteilhaft sind die Bauteile nicht mittels eines Klebers fest verbunden, der bei Einsatz der Leuchteinheit in einem Scheinwerfergehäuse durch Ausgasen eine unerwünschte Belagbildung auf der Abdeckscheibe hervorrufen würde. Darüber hinaus ermöglicht die lösbare Verbindung mindestens zweier Bauteile, dass während des Herstellungsprozesses bei der Qualitätssicherung festgestellte Mängel von einzelnen Bauteilen die weiteren Bauteile wieder in den Herstellungsprozess integriert werden können. Hierdurch lassen sich die Herstellungskosten reduzieren. Erfindungsgemäß sind als Bauteile ein Halter für ein Abschlusselement und ein Reflektor mittels eines Drehverschlusses, insbesondere eines Bajonettverschlusses, miteinander verbunden. Eine Dichtung ist zwischen zwei zueinandergekehrten Verbindungsflächen des Halters einerseits und des Reflektors andererseits vorgesehen, so dass der Innenraum der Leuchteinheit hermetisch nach außen hin abgeschlossen ist. Vorzugsweise liegt die Dichtung auf einer der Verbindungsflächen in radialer Richtung von außen an, so dass aufgrund einer möglicherweise auftretenden Ausgasung des Dichtungsmaterials, beispielsweise des Silikons, eine Trübung der Reflexionsfläche und/oder des Abschlusselementes nicht eintreten kann.

Nach einer weiteren Ausführungsform der Erfindung ist zum einen der Halter für das Abschlusselement und zum anderen ein vorderer Rand des Reflektors mittels eines Bajonettverschlusses an einem gemeinsamen Tragrahmen lösbar verbunden. Vorteilhaft kann hierdurch die Anordnung der Dichtung in den Tragrahmen verlagert werden, so dass die Beeinträchtigung durch eine mögliche Ausgasung des Dichtungsmaterials verringert wird.

Nach einer weiteren Ausführungsform der Erfindung weist der Halter ein kappenförmiges Gehäuseringteil auf, an dessen vorderer Innenseite das Abschlusselement mittels eines innenseitig des Gehäuseringteils anlegbaren Einsatzelementes durch Kraftschluss verbunden ist. Vorzugsweise wird das Einsatzelement unter Verpressen des Abschlusselementes an der Innenseite des Gehäuseringteiles mit demselben verschraubt. Vorteilhaft kann hierdurch auf einfache Weise das vorzugsweise aus einem Glasmaterial bestehende Abschlusselement von dem aus einem Metallwerkstoff bestehenden Gehäuseringteil entfernt werden.

Nach einer Weiterbildung der Erfindung erstreckt sich das Gehäuseringteil in Lichtaustrittsrichtung konusförmig verjüngend, so dass die Verschraubung des Einsatzelementes mit dem Gehäuseringteil in einem Bereich zwischen dem Abschlusselement und dem Reflektor erfolgen kann. Vorteilhaft wird hierbei der Raum für eine Verschraubung genutzt, ohne dass die Lichtabstrahlfläche des Abschlusselementes beeinträchtigt wird.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

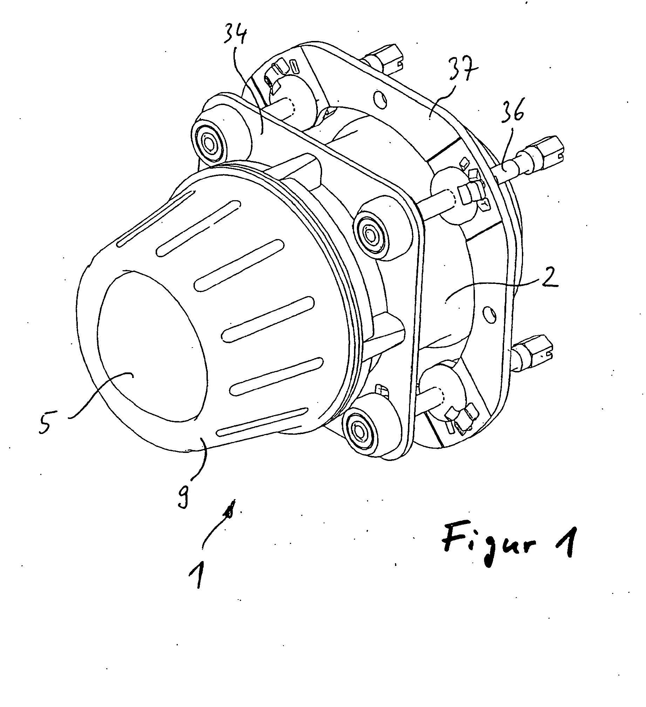

- Figur 1: eine perspektivische Darstellung einer Leuchteinheit,
- Figur 2: einen Längsschnitt durch eine Leuchteinheit nach einer ersten Ausführungsform,

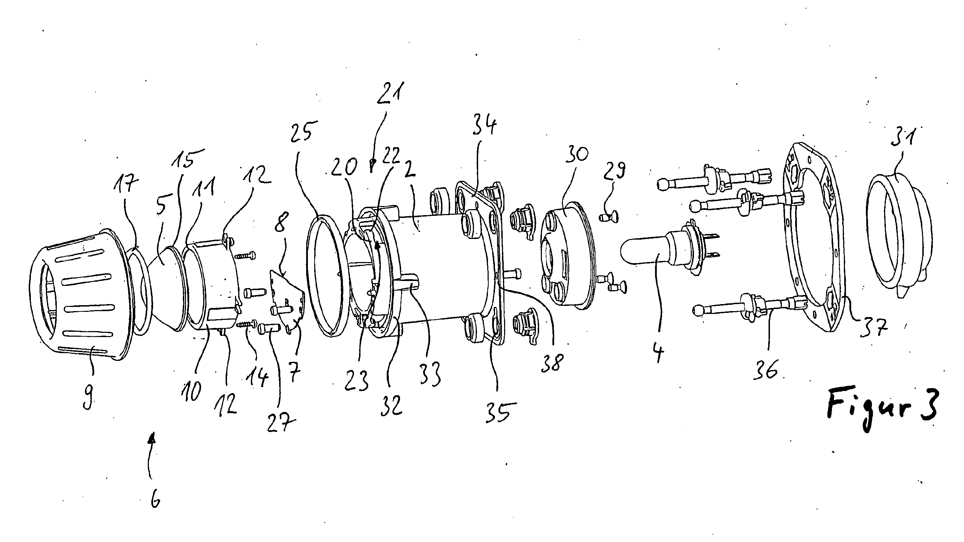

- Figur 3: eine Explosionsdarstellung der Leuchteinheit gemäß Figur 2,
- Figur 4: eine perspektivische Rückansicht eines Gehäuseringteils der Leuchteinheit und
- Figur 5: einen Längsschnitt durch eine Leuchteinheit nach einer zweiten Ausführungsform.

Eine Leuchteinheit 1 für Fahrzeuge kann zum einen als Scheinwerfer oder als Leuchte, beispielsweise als Blinkleuchte oder dergleichen eingesetzt werden. Die Leuchteinheit 1 kann zum einen in einer Karosserieöffnung eines Fahrzeugs eingesetzt und an derselben befestigt sein. Zum anderen kann die Leuchteinheit 1 auch zusammen mit weiteren Leuchteinheiten innerhalb eines die mehreren Leuchteinheiten umfassendes Gehäuses mit einer die vorderseitige Öffnung des Gehäuses abdeckenden klaren Abdeckscheibe angeordnet sein.

Die Leuchteinheit 1 weist als wesentliche Bauteile einen elliptischen Reflektor 2, eine in einer Reflektoröffnung 3 angeordnete Lichtquelle 4, ein dem Reflektor 2 vorgelagertes lichtdurchlässiges Abschlusselement 5 und einen das Abschlusselement 5 tragenden Halter 6 auf. Die Leuchteinheit 1 arbeitet nach dem Projektionsprinzip und weist zu diesem Zweck in einem zweiten Brennpunkt des Reflektors 2 eine Blende 7 auf, deren Blendkante 8 als Hell-Dunkel-Grenze auf die Fahrbahn projiziert wird. Zu diesem Zweck ist das Abschlusselement 5 als eine Linse ausgebildet.

Die Linse 5 ist lösbar mit dem Halter 6 verbunden. Zu diesem Zweck weist der Halter 6 zum einen ein Gehäuseringteil 9 und zum anderen ein Einsatzteil 10 auf. Das Gehäuseringteil 9 und das Einsatzteil 10 sind hohlzylinderförmig ausgebildet, wobei der Durchmesser des Einsatzteiles 10 kleiner ist der Durchmesser des Gehäuseringteils 9, so dass es unter Anlage eines vorderen Randes 11 des Einsatzteils 10 an der planen rückseitigen Fläche der Linse 5 dasselbe in das Gehäuseringteil 9 eingesetzt werden kann. Das Einsatzteil 10 weist auf einer dem Reflektor 2 zugewandten Seite mehrere in Umfangrichtung verteilt angeordnete Befestigungslappen 12, die fluchtend zu innenseitig an dem Gehäuseringteil 9 angeformte Befestigungsbohrungen 13 anordbar sind, so dass das Einsatzteil 10 mittels Schrauben 14 kraftschlüssig mit dem Gehäuseteil 9 verbindbar ist. In der Montageposition liegt der vordere Rand 11 des Einsatzteils 10 auf einem seitlichen Randabsatz 15 der Linse 5 an und verpresst diesen unter Verformung einer zwischen dem Randabsatz 15 und einem Muldenabsatz 16 des Gehäuseringteils 9 angeordneten Ringdichtung 17 gegen den Muldenabsatz 16. Dabei liegt die Linse 5 lagesicher an dem Muldenabsatz 16 des Gehäuseringteils 9 an.

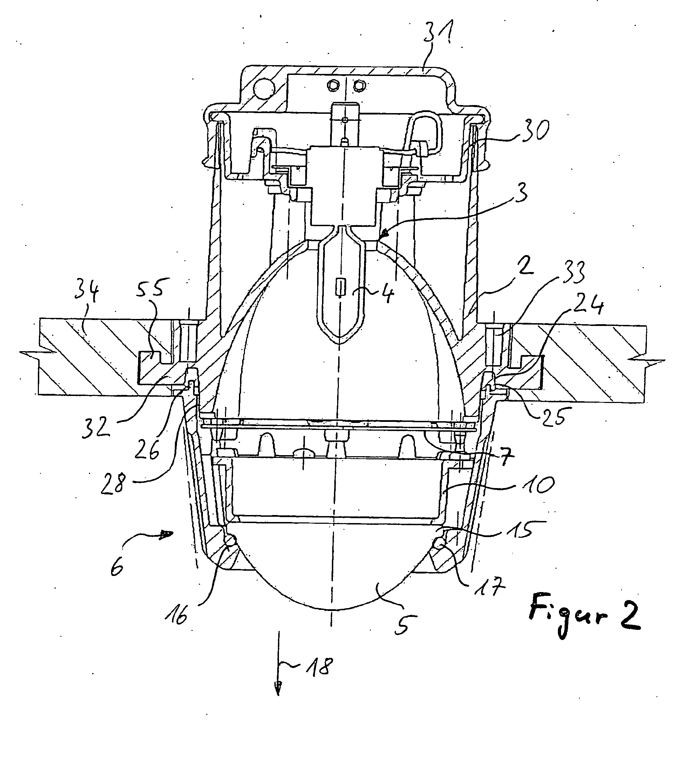

Wie aus Figur 2 ersichtlich ist, erstreckt sich das Gehäuseringteil 9 in Lichtaustrittsrichtung 18 konusförmig verjüngend, so dass in einem mittleren oder in einem der Linse 5 abgewandten Bereich des Gehäuseringteils 9 sich die Befestigungsbohrungen 13 ohne Auswirkung hinsichtlich der Lichtaustrittsfläche der Linse 5 erstrecken können.

Der so gebildete Halter 6 für die Linse 5 ist lösbar mittels eines Drehverschlusses mit dem Reflektor 2 verbunden. Der Drehverschluss ist als Bajonettverschluss ausgebildet, wobei ein radial nach innen abragendes Halteelement 19 des Gehäuseringteils 9 eine in Umfangsrichtung verlaufende Haltenase 20 eines vorderen Randes 21 des Reflektors 2 hintergreift. Sowohl das Halteelement 19 als auch die Haltenase 20 sind widerhakenförmig ausgebildet mit einer in Montagedrehrichtung ansteigenden Schräge 22 und ist einem sich anschließenden Einschnitt 23, in dem der in axialer Richtung vorspringende Teil 22 in der Montageposition eingreift.

Der Reflektor 2 weist an dem vorderen Rand 21 eine Ringnut 24 zur Aufnahme eines Dichtrings 25 auf, so dass das Gehäuseringteil 9 luftdicht mit dem Reflektor 2 verbindbar ist. In der Montageposition drückt eine axial abstehende Ringnase 26 des Gehäuseringteils 9 unter Anlage an dem Dichtring 25 in die Ringnut 24 des Reflektors 2 ein. Dabei bilden die Ringnase 26 und die Ringnut 24 jeweils eine Verbindungsfläche, zwischen denen umlaufend die Dichtung 25 angeordnet ist. Die Tiefe der Ringnut 24 ist derart gewählt, dass der Dichtring 25 vollständig durch den hinteren Rand des Gehäuseringteils 9 abgedeckt ist, so dass kein Ausgasen des beispielsweise aus einem Silikonmaterial gefertigten Dichtrings 25 weder in den Innenraum der Leuchteinheit 1 noch nach außen hin erfolgen kann.

Die Blende 7 ist mittels Schrauben 27 lösbar an dem vorderen Rand 21 des Reflektors 2 befestigt. Dabei reicht ein Außenrand der Blende 7 nicht über eine innere Wandung 28 der Ringnut 24 hinaus.

Die Lichtquelle 4 ist in einer von hinten in den Reflektor 2 mittels Schrauben 29 einschraubbaren Lampenfassung 30 eingefasst und in üblicher Weise arretiert. Eine der Linse 5 abgewandte Öffnung der Lampenfassung 30 bzw. des Reflektors 2 ist mittels einer flexiblen Kappe 31 staubfrei abgedeckt.

Eine äußere Wandung 32 der Ringnut 24 bildet einen radial nach außen abstehenden Kranz 32 des Reflektors 2, an dem Befestigungsaufnahmen 33 verteilt in Umfangsrichtung zur Befestigung eines ersten Tragrahmens 34 angeordnet sind. Der erste Tragrahmen 34 dient zur Befestigung des Reflektors 2 an einem nicht dargestellten Karosserieteil des Kraftfahrzeugs. Zu diesem Zweck weist der erste Tragrahmen umfangsseitig Bohrungen 35 auf, an denen Einstellschrauben 36 gelagert sind, die jeweils in einem axialen Abschnitt mit einem zweiten Tragrahmen 37 verbunden sind, der an der Karosserie angebunden ist. Der Innendurchmesser des zweiten Tragrahmens 37 ist größer als der Außendurchmesser des Reflektors 2; er ist somit in einem radialen Abstand zu dem Reflektor 2 angeordnet. Die Einstellschrauben 36 sind axial verschieblich in den Bohrungen 35 gelagert, so dass die Leuchteinheit 1 zur Leuchtweitenregelung verstellbar angeordnet ist.

Alternativ kann, wie auch in Figur 2 dargestellt ist, die Leuchteinheit 1, die aus dem Reflektor 2 und dem Halter 6 zusammengesetzt ist, mittels eines Drehverschlusses 55 an dem Tragrahmen 34 befestigt sein. Als Drehverschluss 55 kann ein Bajonettverschluss dienen.

Der Innendurchmesser des ersten Tragrahmens 34 entspricht im wesentlichen dem Außendurchmesser des Reflektors 2, so dass der erste Tragrahmen 34 bei der Montage mit Spiel unter fluchtender Anordnung der Befestigungsaufnahmen 33 zu den Bohrungen 38 des ersten Tragrahmens 34 angelegt werden kann. Nachfolgend wird der erste Tragrahmen 34 durch Verschraubung mit dem Reflektor 2 verbunden.

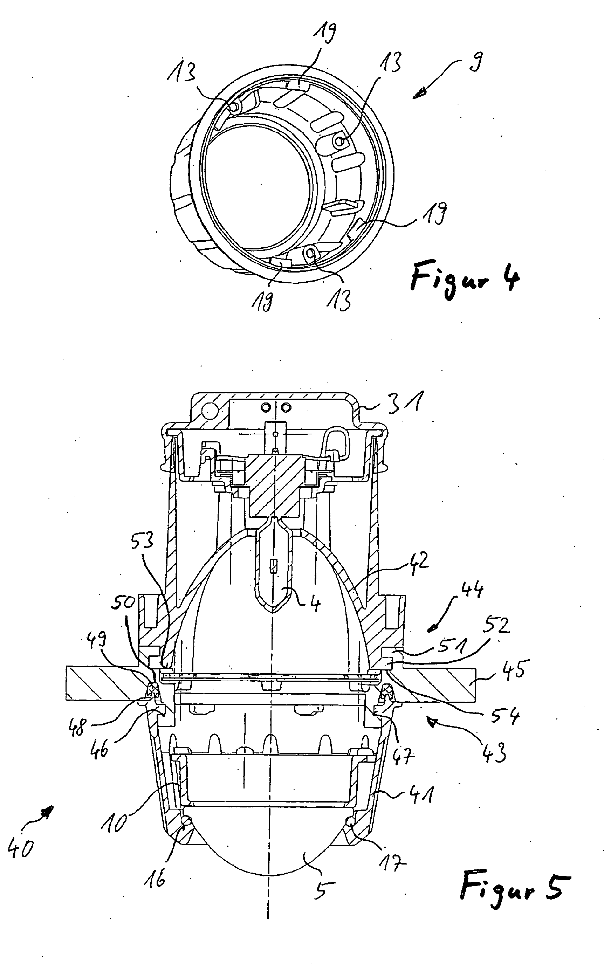

Nach einer alternativen Ausführungsform einer Leuchteinheit 40 gemäß Figur 5 kann im Unterschied zu der Leuchteinheit 1 nach der ersten Ausführungsform ein Gehäuseringteil 41 und ein Reflektor 42 mittels eines Bajonettverschlusses 43 bzw. 44 an einem ersten Tragrahmen 45 befestigt sein. Die weiteren Bauteile der Leuchteinheit 40 stimmen mit den Bauteilen der Leuchteinheit 1 überein und sind daher mit den gleichen Bezugsziffern gekennzeichnet.

Zur Bildung des Bajonettverschlusses 43 zwischen dem Gehäuseringteil 41 und dem ersten Tragrahmen 45 weist derselbe auf einer der Linse 5 zugewandten Seite sich in axialer Richtung erstreckende und umfangsseitig verteilt angeordnete Hakenasen 46 auf, in die korrespondierende Halteelemente 47 des Gehäuseringteils 41 eingreifen können. Im Vergleich zu dem vorhergehenden Ausführungsbeispiel weist das Gehäuseringteil 41 eine größere Längserstreckung auf. In übereinstimmender Weise greift eine Ringnase 48 des Gehäuseringteils 41 unter Anlage an einem Dichtring 49 in eine Ringnut 50 des ersten Tragrahmens 45 ein. Die Befestigung des Gehäuseringteils 41 erfolgt in der gleichen zuvor beschriebenen Weise.

Zur Bildung des Bajonettverschlusses 44 zwischen dem Reflektor 42 und dem ersten Tragrahmen 45 weist derselbe auf einer der Linse 5 abgewandten Seite axial abstehende und im Umfangsrichtung verteilt angeordnete Haltenasen 51 auf, in die korrespondierende Hakenelemente 52 des Reflektors 42 klemmend eingreifen. Dabei liegt der Reflektor 42 mit seinem vorderen Rand 53 an einer inneren Randfläche 54 des ersten Tragrahmens 45 an. Der erste Tragrahmen 45 erstreckt sich in einer Ebene der Blende 7, so dass er im Vergleich zu der ersten Ausführungsform weiter vorne angeordnet ist. Hierdurch ist die Schwenkachse für die Leuchtweitenregelung weiter vorne gelagert, was sich auf die Größe des Drehwinkels auswirkt.

Die vorliegende Leuchteinheit 1, 40 ist als ein Scheinwerfer für die Abblendlichtfunktion ausgebildet. Durch die schwenkbare Anordnung der Leuchteinheit 1, 40 kann diese zusätzlich beispielsweise für die Kurvenlichtfunktion eingesetzt werden.

Das Gehäuseringteil 9 und/oder das Einsatzteil 10 und/oder der Reflektor 2 können jeweils aus einem Metallgussmaterial oder einem Kunststoffmaterial hergestellt sein.

## Patentansprüche

1. Leuchteinheit für Fahrzeuge
- mit einem schalenförmigen Reflektor (2, 42),
- mit einem dem Reflektor (2, 42) vorgelagerten lichtdurchlässigen Abschlusselement (5),
- mit einem das Abschlusselement (5) tragenden Halter (6), der mit einem vorderen Rand (21, 53) des Reflektors (2, 42) verbunden ist,
wobei zum einen der Halter (6) mit dem Reflektor (2, 42) und/oder zum anderen das Abschlusselement (5) mit dem Halter (6) und/oder zum anderen der Halter (41) mit einem die Leuchteinheit (40) tragenden Tragrahmen (45) und/oder zum anderen der vordere Rand des Reflektors (42) mit dem die Leuchteinheit (40) tragenden Tragrahmen (45) lösbar verbunden ist, **dadurch gekennzeichnet, dass** der Halter (6) mittels eines Drehverschlusses mit dem vorderen Rand (21, 53) des Reflektors (2, 42) verbunden ist.

2. Leuchteinheit nach Anspruch 1, **dadurch gekennzeichnet, dass** der Halter (6) mittels eines Bajonettverschlusses mit dem vorderen Rand (21) des Reflektors (2) verbunden ist, wobei zwischen zweier zueinander gekehrter Verbindungsflächen (24, 26) des Halters (6) und des Reflektors (2) eine Dichtung (25) angeordnet ist.

3. Leuchteinheit nach Anspruch 1, **dadurch gekennzeichnet, dass** Halter (41) und/oder der vordere Rand des Reflektors (42) mittels eines Bajonettverschlusses (43, 44) mit dem gemeinsamen Tragrahmen (45) verbunden ist.

4. Leuchteinheit nach einem der Ansprüche 1 bis 3, **dadurch gekennzeichnet, dass** der Halter (6) ein kappenförmiges Gehäuseringteil (9, 41) umfasst, wobei das Abschlusselement (5) mittels eines ringförmigen Einsatzteil (10) an einer Innenseite des Gehäuseringteils (9, 41) durch Verschraubung befestigt ist.

5. Leuchteinheit nach einem der Ansprüche 1 bis 4, **dadurch gekennzeichnet, dass** das Gehäuseringteil (9, 41) sich in Lichtaustrittsrichtung (18) verjüngend erstreckt, wobei das Einsatzteil (10) mit dem Gehäuseringteil (9, 41) in einem Abstand zu einem vorderen Rand des Gehäuseringteils (9, 41) verschraubt ist.

6. Leuchteinheit Anspruch 4 oder 5, **dadurch gekennzeichnet, dass** in einem Bereich zwischen einer vorderen Randfläche (11) des Einsatzteils (10) und der Innenseite des vorderen Randes des Gehäuseteils (9, 41) eine Ringdichtung (17) angeordnet ist.

7. Leuchteinheit nach Anspruch 6, **dadurch gekennzeichnet, dass** die Ringdichtung (17) zwischen einem Randabsatz (15) des Abschlusselementes (5) und einem Muldenabsatz (16) auf einer Innenseite des vorderen Randes des Gehäuseringteils (9, 41) anliegt.

8. Leuchteinheit nach einem der Ansprüche 1 bis 7, **dadurch gekennzeichnet, dass** der Gehäuseringteil (9, 41) auf einer dem Abschlusselement (5) abgewandten Seite nach innen abragende Halteelemente (19, 47) aufweist, die klemmend Haltenasen (20) des Reflektors (2) oder Haltenasen (46) des Tragrahmens (45) hintergreifen.

9. Leuchteinheit nach einem der Ansprüche 1 bis 8, **dadurch gekennzeichnet, dass** der Reflektor (2) oder der Tragrahmen (45) auf einer dem Abschlusselement (5) zugewandten Seite eine Ringnut (24, 50) aufweisen zur Aufnahme des Dichtrings (25, 49) und/oder einer axial abstehende Ringnase (26, 48) des Gehäuseringteils (9, 41).

10. Leuchteinheit nach einem der vorstehenden Ansprüche 1 bis 9, **dadurch gekennzeichnet, dass** die aus Reflektor (2) und Halter (6) zusammengebaute Leuchteinheit (1) mittels eines Drehverschlusses (55) mit dem Tragrahmen (34) verbunden ist.

11. Leuchteinheit nach Anspruch 10, **dadurch gekennzeichnet, dass** der Drehverschluss (55) zwischen dem die Lichtaustrittsfläche des Reflektors (2) begrenzenden Rand des Reflektors (2) und dem Rand einer Aufnahmeöffnung des Tragrahmens (34) gebildet ist.

## Claims

1. Lighting unit for vehicles comprising
- a dome-shaped reflector (2, 42),
- a transparent covering element (5) installed opposite and before the reflector (2, 42),
- a holder (6) holding the covering element (5) and being attached to a front edge (21, 53) of the reflector (2, 42),
wherein the holder (6) is connected to and can be detached from the reflector (2, 42) and/or the covering element (5) is connected to and can be detached from the holder (6) and/or the holder (41) is connected to and can be detached from a frame (45) holding the lighting unit (40) and/or the front edge of the reflector (42) is connected to and can be detached from the frame (45) holding the lighting unit (40), **characterized in that** the holder (6) is attached to the front edge (21, 53) of the reflector (2, 42) by means of a twist-off cap.

2. Lighting unit of claim 1, **characterized in that** a bayonet mount attaches the holder (6) to the front edge (21) of the reflector (2), wherein a gasket (25) is placed between two facing connecting surfaces (24, 26) of the holder (6) and the reflector (2).

3. Lighting unit of claim 1, **characterized in that** a bayonet mount (43, 44) attaches both the holder (41) and/or the front edge of the reflector (42) to the same supporting frame (45).

4. Lighting unit of claims 1 to 3, **characterized in that** the holder (6) comprises a cap-shaped round housing element (9, 41), wherein a screw fitting attaches the covering element (5) to a circular insert (10) and, with it, to the inner face of the round housing element (9, 41).

5. Lighting unit of claims 1 to 4, **characterized in that** the round housing element (9, 41) tapers in the direction of light exit (18), wherein the insert (10) is screwed to the round housing element (9, 41) at some distance away from a front edge of the round housing element (9, 41).

6. Lighting unit of claim 4 or 5, **characterized in that** a sealing ring (17) is placed between a front-edge face (11) of the insert (10) and the inner face of the front edge of the housing element (9, 41).

7. Lighting unit of claim 6, **characterized in that** the sealing ring (17) is jammed between a step in the edge (15) of the covering element (5) and a step in the trough (16) on an inner face of the front edge of the round housing element (9, 41).

8. Lighting unit of claims 1 to 7, **characterized in that** resting elements (19, 47) protrude from one side of the round housing element (9, 41) that faces away from the covering element (5) such that the resting elements (19, 47) come to rest behind locking stubs (20) of the reflector (2) or locking stubs (46) of the supporting frame (45).

9. Lighting unit of claims 1 to 8, **characterized in that** the reflector (2) or the supporting frame (45) have a circular groove (24, 50) on a side facing towards the covering element (5) where the circular groove (24, 50) serves as a rest for the sealing ring (25, 49) and/or a circular cam (26, 48) protruding from the round housing element (9, 41) in axial direction.

10. Lighting unit of one of the above claims 1 to 9, **characterized in that** the lighting unit (1) assembled from the reflector (2) and holder (6) is attached to the supporting frame (34) by means of a twist-off cap (55).

11. Lighting unit of claim 10, **characterized in that** the twist-off cap (55) is located between the edge of the reflector (2) terminating the light exit aperture of the reflector (2) and the edge of a slot opening for the supporting frame (34).

## Revendications

1. Bloc optique pour véhicules, comprenant :
- un réflecteur en forme de bol (2, 42),
- un élément de fermeture (5) transparent, placé devant le réflecteur (2, 42),
- une fixation (6) qui supporte l'élément de fermeture (5) et est reliée à un bord avant (21, 53) du réflecteur (2, 42),
où, d'une part, la fixation (6) est reliée de façon amovible au réflecteur (2, 42) et / ou, d'autre part, l'élément de fermeture (5) est relié de façon amovible à la fixation (6) et / ou, d'autre part, la fixation (41) est reliée de façon amovible à un cadre support (45) supportant le bloc optique (40) et / ou, d'autre part, le bord avant du réflecteur (42) est relié de façon amovible au cadre support (45) supportant le bloc optique (40),
**caractérisé en ce que** la fixation (6) est reliée au bord avant (21, 53) du réflecteur (2, 42), au moyen d'un dispositif de fermeture tournant.

2. Bloc optique selon la revendication 1, **caractérisé en ce que** la fixation (6) est reliée au bord avant (21) du réflecteur (2), par une fermeture à baïonnette, un joint d'étanchéité (25) étant disposé entre deux surfaces d'assemblage (24, 26), tournées l'une vers l'autre, de la fixation (6) et du réflecteur (2).

3. Bloc optique selon la revendication 1, **caractérisé en ce que** la fixation (41) et / ou le bord avant du réflecteur (42) est relié(e) au cadre support commun (45), par une fermeture à baïonnette (43, 44).

4. Bloc optique selon l'une quelconque des revendications 1 à 3, **caractérisé en ce que** la fixation (6) comprend une pièce annulaire de boîtier (9, 41) en forme de calotte, l'élément de fermeture (5) étant fixé, par vissage, sur un côté intérieur de la pièce annulaire de boîtier (9, 41), au moyen d'une pièce intercalaire (10) de forme annulaire.

5. Bloc optique selon l'une quelconque des revendications 1 à 4, **caractérisé en ce que** la pièce annulaire de boîtier (9, 41) s'étend en rétrécissant de façon conique dans la direction de sortie de la lumière (18), la pièce intercalaire (10) étant vissée avec la pièce annulaire de boîtier (9, 41), à distance d'un bord avant de la pièce annulaire de boîtier (9, 41).

6. Bloc optique selon la revendication 4 ou 5, **caractérisé en ce qu'**un joint d'étanchéité annulaire (17) est disposé dans une zone comprise entre une surface de bordure avant (11) de la pièce intercalaire (10), et le côté intérieur du bord avant de la pièce annulaire de boîtier (9, 41).

7. Bloc optique selon la revendication 6, **caractérisé en ce que** le joint d'étanchéité annulaire (17) vient en appui sur un côté intérieur du bord avant de la pièce annulaire de boîtier (9, 41), entre un épaulement de bordure (15) de l'élément de fermeture (5) et un épaulement de cavité (16).

8. Bloc optique selon l'une quelconque des revendications 1 à 7, **caractérisé en ce que** la pièce annulaire de boîtier (9, 41) présente, sur un côté placé à l'opposé de l'élément de fermeture (5), des éléments de retenue (19, 47), dépassant vers l'intérieur, qui s'engagent derrière des ergots de retenue (20) du réflecteur (2) ou derrière des ergots de retenue (46) du cadre support (45), en bloquant ces ergots.

9. Bloc optique selon l'une quelconque des revendications 1 à 8, **caractérisé en ce que** le réflecteur (2) ou le cadre support (45) présente, sur un côté tourné vers l'élément de fermeture (5), une rainure annulaire (24, 50) servant à loger le joint d'étanchéité annulaire (25, 49) et / ou un ergot annulaire (26, 48) de la pièce annulaire de boîtier (9, 41), en saillie axialement.

10. Bloc optique selon l'une quelconque des revendications 1 à 9, **caractérisé en ce que** le bloc optique (1) composé du réflecteur (2) et de la fixation (6) est relié au cadre support (34), au moyen d'un dispositif de fermeture tournant (55).

11. Bloc optique selon la revendication 10, **caractérisé en ce que** le dispositif de fermeture tournant (55) est formé entre le bord du réflecteur (2) délimitant la surface de sortie de la lumière du réflecteur (2), et le bord d'une ouverture de logement du cadre support (34).
